# EUROPEAN PATENT APPLICATION

(11) **EP 3 593 996 A1**
(43) Date of publication of application: **15.01.2020**
(21) Application number: 18763613.9
(22) Date of filing: 26.02.2018
(51) Int. Cl.: B32B 27/36, B42D 25/30

(54) **RESIN LAMINATE AND CARD COMPRISING RESIN LAMINATE**

(30) Priority: 06.03.2017 JP 2017041639
(71) Applicant: Mitsubishi Gas Chemical Company, Inc., Tokyo 100-8324 (JP); MGC Filsheet Co., Ltd., Saitama 359-1164 (JP)
(72) Inventor: SUZUKI Kentaro, Tokyo 125-8601 (JP); TAKEDA Masahide, Tokyo 125-8601 (JP); ASANO Junya, Tokorozawa-shi Saitama 359-1164 (JP)
(74) Representative: Hoffmann Eitle
(86) International application number: PCT/JP2018/006999
(87) International publication number: WO 2018/163889

(57) **Abstract**

The present invention enables the achievement of: a resin laminate which has high durability, high heat resistance and excellent easy processability, while maintaining transparency; and a card which comprises a resin laminate. The above-described problem is solved by a resin laminate according to the present invention, which is obtained by laminating a plurality of resin sheets, and wherein the outermost resin sheet that constitutes the outermost layer of the resin laminate contains a polycarbonate resin (A) that has a viscosity average molecular weight of from 30,000 to 60,000 (inclusive).

## Description

### TECHNICAL FIELD

The present invention relates to a laminate of resin sheets containing a resin that has high durability and heat resistance and can be easily processed, and a card comprising such a resin laminate.

### BACKGROUND ART

Resin films are conventionally used for security cards, ID cards, e-passports, contactless IC cards, etc. It is known that as a material of such resin films, for example, polyvinyl chloride (PVC) is used. Meanwhile, use of a polyethylene terephthalate-based non-polyvinyl chloride resin such as PET-G is also known (see Patent Documents 1 and 2).

It is also known that polyester resin compositions are used as resin compositions for various cards (see Patent Document 3). Patent Document 1 discloses a polyester resin composition which contains a polyester resin mainly composed of PET and an aromatic polycarbonate resin.

### PRIOR ART DOCUMENTS

### PATENT DOCUMENTS

Patent Document 1: Japanese Patent No. 4281554
Patent Document 2: Japanese Laid-Open Patent Publication No. 2004-17614
Patent Document 3: Japanese Laid-Open Patent Publication No. 2002-97361

### DISCLOSURE OF THE INVENTION

### PROBLEMS TO BE SOLVED BY THE INVENTION

When using PVC and a polyethylene terephthalate-based resin such as PET-G as a resin composition for cards, the problem of mechanical strength of cards may arise since durability and heat resistance of these resins are not necessarily sufficient. Meanwhile, in general, many resins having excellent durability are not easily processed, and for this reason, there is a problem that it is not necessarily easy to produce a card or the like using a resin having excellent durability.

Patent Document 3 describes that the above-described polyester resin composition is excellent in heat resistance, impact resistance, etc. However, the polyester resin composition has poor transparency and the resolution of printed portions is reduced.

### MEANS FOR SOLVING THE PROBLEMS

The present inventors diligently made researches in order to solve the above-described problems and found that a predetermined resin containing a polycarbonate has high durability and heat resistance and maintains transparency while having excellent easiness of processing, and thus the present invention was achieved.

Specifically, the present invention relates to a resin laminate formed with a predetermined resin and a card comprising the resin laminate described below.

(1) A resin laminate in which a plurality of resin sheets are laminated, wherein the outermost resin sheet that constitutes the outermost layer of the resin laminate comprises a polycarbonate resin (A) having a viscosity average molecular weight of from 30,000 to 60,000.
(2) The resin laminate according to item (1), wherein the outermost resin sheet further comprises a polycarbonate resin (B) having a viscosity average molecular weight of from 15,000 to 29,000.
(3) The resin laminate according to item (1) or (2), wherein the mass ratio between the polycarbonate resin (A) and the polycarbonate resin (B) in the outermost resin sheet is from 100:0 to 20:80.
(4) The resin laminate according to any one of items (1) to (3), wherein the outermost resin sheet has a thickness of 20 to 200 µm.
(5) The resin laminate according to any one of items (1) to (4), which has 1 to 7 inner resin sheets that are resin sheets other than the outermost resin sheet in the resin laminate.
(6) The resin laminate according to any one of items (1) to (5), wherein the inner resin sheets that are resin sheets other than the outermost resin sheet in the resin laminate comprise at least one selected from the group consisting of a polyester resin, an alloy of polyester-polycarbonate resin, a polycarbonate resin and a polyvinyl chloride resin.
(7) The resin laminate according to any one of items (1) to (6), wherein the inner resin sheets that are resin sheets other than the outermost resin sheet in the resin laminate are resin sheets comprising a polycarbonate resin, and wherein the polycarbonate resin has a viscosity average molecular weight of from 15,000 to 29,000.
(8) The resin laminate according to any one of items (1) to (7), wherein at least one of the inner resin sheets that are resin sheets other than the outermost resin sheet in the resin laminate is a laser marking layer.
(9) The resin laminate according to any one of items (1) to (8), wherein at least one of the inner resin sheets that are resin sheets other than the outermost resin sheet in the resin laminate is a white core layer.
(10) The resin laminate according to any one of items (1) to (9), wherein each of the inner resin sheets that are resin sheets other than the outermost resin sheet in the resin laminate has a thickness of 30 to 700 µm.
(11) The resin laminate according to any one of items (1) to (10), which has a total thickness of 680 to 840 µm.
(12) The resin laminate according to any one of items (1) to (11), wherein the outermost resin sheet constitutes the outermost layers of both the surfaces of the resin laminate.
(13) The resin laminate according to any one of items (1) to (12), wherein a resin forming the outermost resin sheet has a glass transition temperature of 130°C or higher.
(14) A security card or ID card which comprises the resin laminate according to any one of items (1) to (13).

### ADVANTAGEOUS EFFECT OF THE INVENTION

The resin laminate of the present invention has a resin sheet that contains a polycarbonate resin having a viscosity within a predetermined range at least as the outermost layer as described above, is excellent in durability, and has very high durability particularly with respect to bending fatigue. Moreover, the resin laminate of the present invention is easily processed by heating a resin as a material. The resin laminate of the present invention that has excellent characteristics as described above is suitably used as various sheet-like members, in particular, as a card, etc., and for example, it is suitably used as a security card, an ID card, an e-passport, a contactless IC card, etc.

### BRIEF DESCRIPTION OF THE DRAWINGS

FIG. 1 is a cross sectional view showing a specific example of the resin laminate (ID card).
FIG. 2 is a cross sectional view showing a specific example of the resin laminate which is formed only by transparent layers.

### BEST MODE FOR CARRYING OUT THE INVENTION

Hereinafter, the present invention will be described in detail. Note that the present invention is not limited to the below-described embodiments, and can be arbitrarily changed and then carried out within a range in which the effects of the present invention are exerted.

### [Resin laminate]

The resin laminate of the present invention has a plurality of layered resin sheets. Further, the resin sheets of the resin laminate include the outermost resin sheet which constitutes the outermost layer and an inner resin sheet which is arranged in the inside of the resin laminate, i.e., at a position inner than that of the outermost resin sheet in the laminate.

The technique of forming the resin laminate by laminating these resin sheets is not particularly limited, but it is preferred to subject the respective resin sheets in a molten state to fusion bonding by a heating press. In the resin laminate obtained in this way, the interface between laminated resin sheets is smooth.

The thickness of the resin laminate, i.e., the total thickness of all the resin sheets of the resin laminate is not particularly limited, but it is preferably 680 to 840 µm, and more preferably 720 to 800 µm.

Further, as described in detail later, the resin laminate having the outermost resin sheet excellent in durability and easiness of processing is suitably used as a sheet-like member such as a card, for example, a security card or an ID card.

### [Outermost resin sheet]

The outermost resin sheet contains a polycarbonate resin (A) which has a viscosity average molecular weight of from 30,000 to 60,000. The viscosity average molecular weight of the polycarbonate resin (A) is preferably from 32,000 to 55,000, more preferably from 34,000 to 50,000, and particularly preferably from 36,000 to 45,000. The outermost resin sheet containing the polycarbonate resin (A) having such a high molecular weight is excellent particularly in durability.

Further, it is preferred that the outermost resin sheet further contains a polycarbonate resin (B) which has a viscosity average molecular weight of from 15,000 to 29,000. The viscosity average molecular weight of the polycarbonate resin (B) is preferably from 20,000 to 29,000, more preferably from 22,000 to 28,500, and particularly preferably from 24,000 to 28,000. By using the polycarbonate resin (B) having such a relatively low molecular weight, processing can be easily carried out in the production process of the outermost resin sheet.

The mass ratio between the polycarbonate resin (A) and the polycarbonate resin (B) is preferably from 100:0 to 20:80, more preferably from 90:10 to 30:70, even more preferably from 80:20 to 40:60, and particularly preferably from 70:30 to 50:50.

As a thermoplastic resin other than the polycarbonate resins (A) and (B) in the outermost resin sheet, a polyester resin, a polycarbonate resin with a value of the viscosity different from those of the, etc. may be contained.

Moreover, the outermost resin sheet may contain the below-described additives as components other than the polycarbonate resins (A) and (B). Specifically, they are at least one additive selected from the group consisting of a thermal stabilizer, an antioxidant, a flame retardant, a flame retardant auxiliary agent, an ultraviolet absorber, a mold release agent and a coloring agent, etc. An antistatic agent, a fluorescent brightener, an antifog additive, a flowability improving agent, a plasticizer, a dispersant, an antimicrobial agent, etc. may also be added as long as desired physical properties are not significantly impaired.

In the outermost resin sheet, the polycarbonate resins (A) and (B) are contained preferably in an amount of 80% by mass or more, more preferably 90% by mass or more, and particularly preferably 95% by mass or more.

The thickness of the outermost resin sheet is not particularly limited, but it is preferably 20 to 200 µm, more preferably 30 to 150 µm, and particularly preferably 50 to 100 µm.

Further, the outermost resin sheet preferably constitutes the outermost layers of both the surfaces of the resin laminate. By arranging the outermost resin sheet on both the front side and the back side of the resin laminate which is utilized as a card or the like, durability of the resin laminate can be improved more than the case where the outermost resin sheet is arranged only on one side.

### [Inner resin sheet]

The resin laminate of the present invention comprises an inner resin sheet which is arranged at a position inner than that of the outermost resin sheet. The number of the inner resin sheet is not particularly limited, but for example, it is 1 to 7, or about 2 to 5.

The inner resin sheet preferably contains at least one of a polyester resin, an alloy of polyester-polycarbonate resin, a polycarbonate resin and a polyvinyl chloride resin. More preferably, the inner resin sheet contains a polycarbonate resin. The polycarbonate resin contained in the inner resin sheet has a viscosity average molecular weight of preferably from 15,000 to 29,000, more preferably from 20,000 to 29,000, even more preferably from 22,000 to 28,500, and particularly preferably from 24,000 to 28,000.

The inner resin sheet is, for example, a laser marking layer which contains a laser color former. The laser marking layer enables printing by means of marking treatment and is useful for cards requiring prevention of falsification particularly. By using the resin laminate having the laser marking layer, a laser marking sheet can be produced. As the laser color former, carbon black, antimony-doped tin oxide, a bismuth oxide-based color former or the like is used, and preferably, carbon black is used. The content of the laser color former is 0.0001 to 0.2% by mass, preferably 0.0005 to 0.15% by mass, and more preferably 0.001 to 0.1% by mass based on the mass of the inner resin sheet.

For example, when using carbon black as the laser color former, the content of carbon black is 1 to 100 mass ppm, and preferably 5 to 20 mass ppm based on the mass of the whole resin composition. Further, when using the above-described metal oxide-based laser color former, the content of the laser color former is, for example, 50 to 5000 mass ppm, preferably 80 to 3000 mass ppm, and more preferably 100 to 2000 mass ppm based on the mass of the whole resin composition.

Further, the inner resin sheet is, for example, a core layer (white core layer) which contains a white pigment. The inner resin sheet as the white core layer includes, for example, an antenna of an ID card or the like. Specifically, by using the resin laminate having the white core layer, an antenna chip-embedded sheet can be produced.

As the white pigment, titanium oxide, talc, kaolin, clay, mica or the like is used, and titanium oxide is preferably used. The content of the white pigment is 10 to 30% by mass, preferably 13 to 25% by mass, and more preferably 15 to 20% by mass based on the mass of the inner resin sheet.

The thickness of each layer other than the outermost resin sheet in the resin laminate, i.e., the thickness of the inner resin sheet (single layer) is not particularly limited, but it is preferably 30 to 700 µm. Further, when the inner resin sheet is, for example, the above-described laser marking layer, the range of the thickness is more preferably 30 to 150 µm, and particularly preferably 50 to 100 µm. When the inner resin sheet is, for example, the above-described white core layer, the range of the thickness is more preferably 100 to 500 µm, and particularly preferably 150 to 300 µm. Further, the total thickness of the inner resin sheets is preferably 300 to 750 µm, more preferably 350 to 700 µm, and particularly preferably 400 to 600 µm.

### [Polycarbonate resin]

The polycarbonate (PC) resin contained in the resin laminate such as the polycarbonate resins (A) and (B) is not particularly limited as long as it contains a carbonate bond in the main chain of the molecule, i.e., it contains a -[O-R-OCO]- unit (R includes an aliphatic group, an aromatic group, or both of the aliphatic group and the aromatic group, and further has a linear structure or a branched structure), but a polycarbonate and the like having a bisphenol A skeleton are preferred, and a polycarbonate having a bisphenol A skeleton is particularly preferred.

Further, the resins forming the respective layers of the resin laminate, in particular, the thermoplastic resin forming the outermost resin sheet and the polycarbonate resin which is the main component of the thermoplastic resin forming the outermost resin sheet have a glass transition temperature (Tg) of preferably 130°C or higher, more preferably 135°C or higher, even more preferably 140°C or higher, and particularly preferably 145°C or higher. The upper limit of the glass transition temperature (Tg) of the thermoplastic resin and the polycarbonate resin can be adjusted within a range in which processing these resins to form a layer shape is not hindered. For example, the upper limit is 200°C or lower, or 180°C or lower.

### [Method for producing resin sheet and resin laminate]

In the production of the resin laminate of the present invention, firstly, each sheet is produced. In the production of a resin sheet, as a method for processing the resin composition to form a layer shape (sheet shape), a conventional technique can be employed. Examples thereof include methods using extrusion molding or cast molding.

For example, in a method using extrusion molding, the resin composition of the present invention in the form of pellet, flake or powder is melted and kneaded by an extruder and then extruded from a T-die or the like, and a sheet in a semi-melted state obtained is cooled and solidified while being compressed by rolls, thereby forming a sheet.

Further, the above-described respective sheets, i.e., the outermost resin sheet and the inner resin sheet are layered, thereby producing the resin laminate. As described in detail later, examples of the method for layering the resin sheets include a method for using a card production device such as a contactless IC card production device (NIC 300 type: manufactured by Nissei Plastic Industrial Co., Ltd.).

Thus, the resin laminate of the present invention can be produced by layering the respective layers in a relatively small number of steps without an adhesive, an adhesive layer, etc., but the adhesive or adhesive layer may be used to improve adhesiveness between the respective sheets.

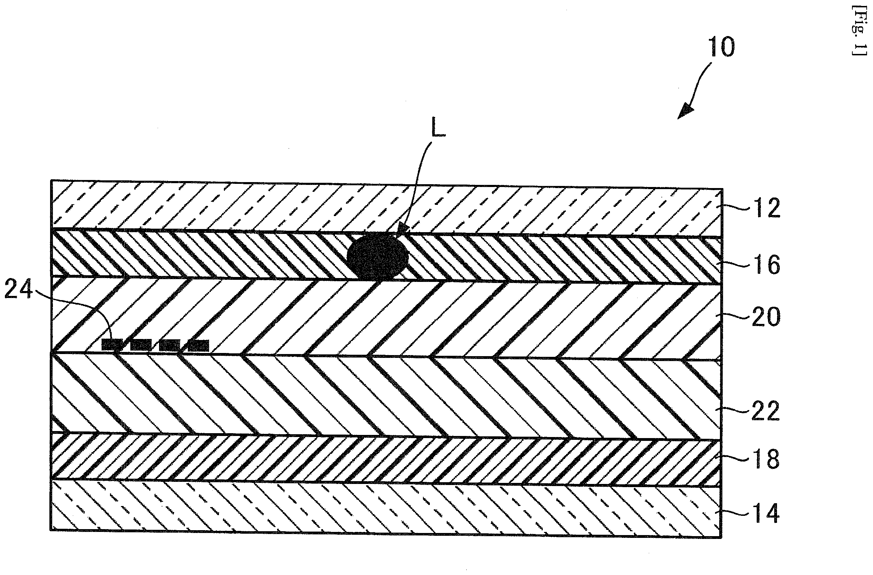

Specific examples of the resin laminate include an ID card 10 shown in Figure 1. The ID card 10 is a laminate comprising a first outermost resin sheet 12, a second outermost resin sheet 14, a first laser marking layer 16, a second laser marking layer 18, a first white core layer 20 and a second white core layer 22. The first outermost resin sheet 12 and the second outermost resin sheet 14 are colorless and transparent, and on the first laser marking layer 16 and the second laser marking layer 18, it is possible to provide printing by means of irradiation of a light L using a laser light source. The first white core layer 20 and the second white core layer 22 are white because the white pigment is contained therein, and in the first white core layer 20, an antenna chip 24 is embedded. The information of an IC chip (not shown) is overwritten in response to an electromagnetic wave from outside received by the antenna chip 24.

In the ID card 10, the first outermost resin sheet 12 and the second outermost resin sheet 14 contain the above-described polycarbonate resin (A) having a high viscosity and high molecular weight, and it is excellent particularly in surface durability. Further, by forming the first outermost resin sheet 12, the second outermost resin sheet 14, etc. with use of a resin mixture (alloy) containing the polycarbonate resin (B) having a relatively low viscosity and low average molecular weight together with the polycarbonate resin (A), it becomes easy to process the resin to form a sheet or film.

### EXAMPLES

Hereinafter, the present invention will be described in more detail by way of examples. However, the present invention is not limited to the below-described examples, and can be arbitrarily changed and then carried out without departing from the gist of the present invention.

### <Durability>

The durability of the resin laminate of each of Examples and Comparative Examples was evaluated as described below. Firstly, a resin laminate having a thickness of about 0.8 mm was prepared using resins shown in Tables 1 and 2. A card bending test was conducted using an IC card bending/torsion test machine (manufactured by Toyo Seiki Seisaku-sho, Ltd.), and the number of times of bending until a crack was generated in the resin laminate was measured. This dynamic bending test was conducted in accordance with JIS X6305-1 (ISO/IEC10373-1), and evaluation was made based on the numerical value of the number of times of bending until a crack was generated as follows: 130,000 times or more: good
50,000 times or more but less than 130,000 times: slightly poor
Less than 50,000 times: poor

### <Heat resistance>

The heat resistance of the outermost resin sheet of each of Examples and Comparative Examples was evaluated as described below. The glass transition temperature (Tg) of the resin composition to be measured was measured using a differential scanning calorimeter EXSTAR DSC 7020 (DSC) manufactured by Hitachi High-Tech Science Corporation, and the heat resistance was evaluated as described below. In the measurement, the temperature was increased to a temperature at which the resin component was melted under nitrogen atmosphere (270°C) at a rate of 15°C/min, decreased to 30°C at a rate of 20°C/min, and then increased again at a rate of 15°C/min (2nd run). The glass transition temperature was obtained based on the extrapolated onset temperature calculated from the obtained DSC curve (see JIS K 7121, JIS K 0129 and ISO3146).

The glass transition temperature was 145°C or higher: good
The glass transition temperature was 120°C or higher but lower than 145°C: slightly poor
The glass transition temperature was lower than 120°C: poor

### <Transparency>

The transparency of the outermost resin sheet of each of Examples and Comparative Examples was evaluated as described below. A film having a thickness of 0.3 mm was formed using the resin composition to be measured. The Haze value thereof was measured using a Haze meter (HM-150 manufactured by Murakami Color Research Laboratory Co., Ltd.), and the transparency was evaluated as described below. The Haze value was measured in accordance with JIS K 7136.

The Haze value was less than 1%: good
The Haze value was 1% or more but less than 5%: slightly poor
The Haze value was 5% or more: poor

### <Easiness of processing>

The easiness of processing at the time of sheet forming of the outermost resin sheet of each of Examples and Comparative Examples was evaluated as described below. The flow value (Q value) of the resin composition to be measured was measured using a Koka flow tester in accordance with JIS K7210, and evaluation was made as described below.

The flow value (Q value) was 0.3 or more: good
The flow value (Q value) was less than 0.3: poor

### <Production of resin sheet>

The resin composition for forming each of the resin laminates of Examples 1-7 and Comparative Examples 1-5 was produced as described below. Specifically, components were blended using a tumbler so that the composition shown in Tables 1 and 2 below was obtained, and it was put into a twin screw extruder (manufactured by Toshiba Machine Co., Ltd., TEM26SS) from the base portion thereof to be melt-kneaded at a cylinder temperature of 300°C, thereby preparing a pellet-type resin composition.
(1) PC resin K-4000 (bisphenol A-type aromatic polycarbonate resin manufactured by Mitsubishi Gas Chemical Company, Inc. (viscosity average molecular weight: 39,000))
(2) PC resin E-2000 (bisphenol A-type aromatic polycarbonate resin manufactured by Mitsubishi Engineering-Plastics Corporation, "Iupilon (registered trademark) E-2000" (viscosity average molecular weight: 27,500))
(3) PETG S2008 ("SKYGREEN (registered trademark) S2008" manufactured by SK Chemicals, modified polyethylene terephthalate resin (viscosity average molecular weight: 31,000))

Using the above-described resin composition (pellet), a resin sheet was produced as described below. Firstly, using a T-die melt extruder composed of a single screw extruder with a barrel diameter of 100 mm and screw L/D=32.0, a sheet having a width of 1200 mm was formed at a discharge rate of 100 kg/hour and at a screw rotation speed of 30 rpm. The cylinder/die head temperature was set at 300°C. Further, for the above-described evaluation of durability, a sheet with a thickness described in Tables 1 and 2 was formed using the resin composition.

### <Production of resin laminate>

The respective resin sheets produced according to the above-described production method were layered as described below to produce each of the resin laminates of Examples 1-7 and Comparative Examples 1-5. Specifically, the resin sheets were pressed using a contactless IC card production device (NIC 300 type: manufactured by Nissei Plastic Industrial Co., Ltd.) at a heating temperature of 180°C for a takt time of 2 minutes (preheating, heating/fusion bonding, cooling) so that the total thickness became about 800 µm to provide a layer structure of the outermost resin sheet/the inner resin sheet/the outermost resin sheet. After that, punching was carried out to prepare a laminate.

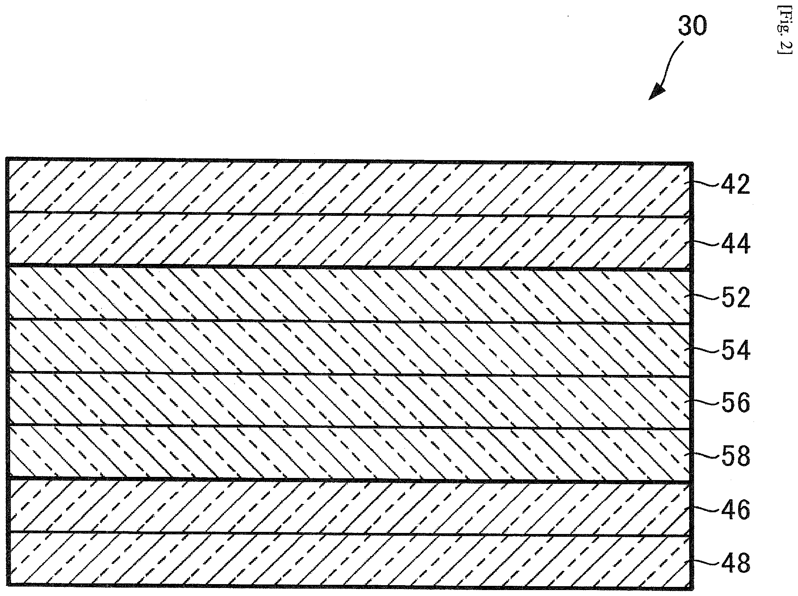

Among the above-described resin laminates, those of Examples 1 and 2 and Comparative Examples 1-3 having only transparent layers were evaluated with respect to the durability. The resin laminates of Examples 1 and 2 and Comparative Examples 1-3 have a structure shown in Figure 2, and have transparent layers 1 (the first transparent sheets 42, 44, 46 and 48 in Figure 2), which are formed with the same resin material, and transparent layers 2 (the second transparent sheets 52, 54, 56 and 58), which are formed with the same resin material. The number of times of the dynamic bending test of these laminates was measured, and the results were as shown in Table 1.

**[Table 1]**

| | | | **Example 1** | **Example 2** | **Comparative Example 1** | **Comparative Example 2** | **Comparative Example 3** |
|---|---|---|---|---|---|---|---|
| **Lamination form** | | | **Transparent layer 1 [100 µm]** | | **Transparent layer 1 [100 µm]** | | |
| | | | **Transparent layer 1 [100 µm]** | | **Transparent layer 1 [100 µm]** | | |
| | | | **Transparent layer 2 [100 µm]** | | **Transparent layer 2 [100 µm]** | | |
| | | | **Transparent layer 2 [100 µm]** | | **Transparent layer 2 [100 µm]** | | |
| | | | **Transparent layer 2 [100 µm]** | | **Transparent layer 2 [100 µm]** | | |
| | | | **Transparent layer 2 [100 µm]** | | **Transparent layer 2 [100 µm]** | | |
| | | | **Transparent layer 1 [100 µm]** | | **Transparent layer 1 [100 µm]** | | |
| | | | **Transparent layer 1 [100 µm]** | | **Transparent layer 1 [100 µm]** | | |
| **Total thickness [µm]** | | | **800** | **800** | **800** | **800** | **800** |
| **Transparent layer 1 (outermost layer)** | **Material composition [wt%]** | **PC resin K-4000 (Mv: 39,000)** | **90** | **90** | **-** | **-** | **-** |
| | | **PC resin E-2000 (Mv: 27,500)** | **10** | **10** | **100** | **100** | **-** |
| | | **PETG resin S2008 (Mv: 31,000)** | **-** | **-** | **-** | **-** | **100** |
| | **Thickness [µm]** | | **100** | **100** | **100** | **100** | **100** |
| | **Evaluation of outermost sheet** | **Durability** | **good** | **good** | **good** | **good** | **poor** |
| | | **Transparency** | **good** | **good** | **good** | **good** | **good** |
| | | **Easiness of processing** | **good** | **good** | **good** | **good** | **good** |
| **Transparent layer 2** | **Material composition [wt%]** | **PC resin K-4000 (Mv: 39,000)** | **-** | **90** | **-** | **90** | **-** |
| | | **PC resin E-2000 (Mv: 27,500)** | **100** | **10** | **100** | **10** | **-** |
| | | **PETG S2008** | **-** | **-** | **-** | **-** | **100** |
| | **Thickness [µm]** | | **100** | **100** | **100** | **100** | **100** |
| **Number of times of dynamic bending test** | | **Number of times** | **180,000∼190,000** | **170,000∼180,000** | **100,000∼110,000** | **110,000∼120,000** | **5000 times or less** |
| **good: 130,000 times or more** | | **Evaluation** | **good** | **good** | **slightly poor** | **slightly poor** | **poor** |
| **slightly poor: 50,000 times or more** | | | | | | | |
| **poor: 50,000 times or less** | | | | | | | |

Thus, it was confirmed that the polycarbonate resin having high viscosity is useful for the improvement of the durability of the laminate, and that use of the polycarbonate resin in the outermost layer is particularly effective for the improvement of the durability.

Then, in Examples 3-7 and Comparative Examples 4-5, a plurality of laminates, which are similar to an example of the ID card shown in Figure 1 but do not include any antenna chip, were produced using the polycarbonate resin having high viscosity in the outermost layer. In these examples, the composition of the resin of the outermost layer, the number of the resin sheets and the thickness were adjusted. The durability of these examples were evaluated and the results are shown in Table 2.

**[Table 2]**

| | | | **Example 3** | **Example 4** | **Example 5** | **Example 6** | **Example 7** | **Comparative Example 4** | **Comparative Example 5** |
|---|---|---|---|---|---|---|---|---|---|
| **Lamination form** | | | **OL liver [100 µm]** | **OL layer [100 µm]** | **OL layer [100 µm]** | **OL layer [50 µm]** | **OL layer [200 µm]** | **OL layer [100 µm]** | **OL layer [100 µm]** |
| | | | **LM layer [100 µm]** | **LM layer [100 µm]** | **LM layer [100 µm]** | **LM layer [50 µm]** | | **LM layer [100 µm]** | **LM layer [100 µm]** |
| | | | **WC layer [200 µm]** | **WC layer [200 µm]** | **WC layer [200 µm]** | **WC layer [200 µm]** | **WC layer [200 µm]** | **WC layer [200 µm]** | **WC layer [200 µm]** |
| | | | **WC layer [200 µm]** | **WC layer [200 µm]** | **WC layer [200 µm]** | **WC layer [200 µm]** | **WC layer [200 µm]** | **WC laye [200 µm]** | **WC layer [200 µm]** |
| | | | | | | **WC layer [200 µm]** | | | |
| | | | **LM layer [100 µm]** | **LM layer [100 µm]** | **LM layer [100 µm]** | **LM layer [50 µm]** | | **LM layer [100 µm]** | **LM layer [100 µm]** |
| | | | **OL layer [100 µm]** | **OL layer [100 µm]** | **OL layer [100 µm]** | **OL layer [50 µm]** | **OL layer [200 µm]** | **OL laver [100 µm]** | **OL layer [100 µm]** |
| **Total thickness** [µm] | | | **600** | **600** | **600** | **700** | **400** | **600** | **600** |
| **Outermost layer (OL layer)** | **Material composition [wt%]** | **PC resin K-4000 (Mv: 39,000)** | **90** | **70** | **50** | **90** | **90** | **-** | **-** |
| | | **PC resin E-2000 (Mv: 27,500)** | **10** | **30** | **50** | **10** | **10** | **100** | **97.5** |
| | | **Antistatic material** | **-** | **-** | **-** | **-** | **-** | **-** | **2.5** |
| | **Thicknss [µm]** | | **100** | **100** | **100** | **50** | **200** | **100** | **100** |
| | **Evaluation of outermost sheet** | **Heat resistance** | **good** | **good** | **good** | **good** | **good** | **good** | **slightly poor** |
| | | **Transparency** | **good** | **good** | **good** | **good** | **good** | **good** | **good** |
| | | **Easiness of processing** | **good** | **good** | **good** | **good** | **good** | **good** | **good** |
| **Laser marking layer (LM layer)** | **Material composition [wt%]** | **PC resln E-2000 (Mv:27,500)** | **100** | **100** | **100** | **100** | **-** | **100** | **100** |
| | | **Carbon black** | **0.001** | **0.001** | **0.001** | **0.001** | **-** | **0.001** | **0.001** |
| | **Thickness [µm]** | | **100** | **100** | **100** | **50** | **-** | **100** | **100** |
| **White core layer (WC layer)** | **Material composition [wt%]** | **PC resin E-2000 (Mv: 27,500)** | **85** | **85** | **85** | **85** | **85** | **85** | **85** |
| | | **Titanium oxide** | **15** | **15** | **15** | **15** | **15** | **15** | **15** |
| | **Thickness [µm]** | | **200** | **200** | **200** | **200** | **200** | **200** | **200** |
| **Number of times of dynamic bending test** | | **Number of times** | **140,000∼145,000** | **135,000∼140,000** | **150,000∼155,000** | **140,000∼145,000** | **135,000∼140,000** | **95,000∼100,000** | **30,000∼35,000** |
| **good: 130,000 times or more** | | | | | | | | | |
| **slightly poor: 50,000 times or more** | | **Evaluation** | **good** | **good** | **good** | **good** | **good** | **slightly poor** | **poor** |
| **poor: 50,000 times or less** | | | | | | | | | |

### EXPLANATIONS OF LETTERS OR NUMERALS

- 10: ID card (resin laminate)
- 12: first outermost resin sheet
- 14: second outermost resin sheet
- 16: first laser marking layer
- 18: second laser marking layer
- 20: first white core layer
- 22: second white core layer
- 24: antenna chip

## Claims

1. A resin laminate in which a plurality of resin sheets are laminated, wherein the outermost resin sheet that constitutes the outermost layer of the resin laminate comprises a polycarbonate resin (A) having a viscosity average molecular weight of from 30,000 to 60,000.

2. The resin laminate according to claim 1, wherein the outermost resin sheet further comprises a polycarbonate resin (B) having a viscosity average molecular weight of from 15,000 to 29,000.

3. The resin laminate according to claim 1 or 2, wherein the mass ratio between the polycarbonate resin (A) and the polycarbonate resin (B) in the outermost resin sheet is from 100:0 to 20:80.

4. The resin laminate according to any one of claims 1 to 3, wherein the outermost resin sheet has a thickness of 20 to 200 µm.

5. The resin laminate according to any one of claims 1 to 4, which has 1 to 7 inner resin sheets that are resin sheets other than the outermost resin sheet in the resin laminate.

6. The resin laminate according to any one of claims 1 to 5, wherein the inner resin sheets that are resin sheets other than the outermost resin sheet in the resin laminate comprise at least one selected from the group consisting of a polyester resin, an alloy of polyester-polycarbonate resin, a polycarbonate resin and a polyvinyl chloride resin.

7. The resin laminate according to any one of claims 1 to 6, wherein the inner resin sheets that are resin sheets other than the outermost resin sheet in the resin laminate are resin sheets comprising a polycarbonate resin, and wherein the polycarbonate resin has a viscosity average molecular weight of from 15,000 to 29,000.

8. The resin laminate according to any one of claims 1 to 7, wherein at least one of the inner resin sheets that are resin sheets other than the outermost resin sheet in the resin laminate is a laser marking layer.

9. The resin laminate according to any one of claims 1 to 8, wherein at least one of the inner resin sheets that are resin sheets other than the outermost resin sheet in the resin laminate is a white core layer.

10. The resin laminate according to any one of claims 1 to 9, wherein each of the inner resin sheets that are resin sheets other than the outermost resin sheet in the resin laminate has a thickness of 30 to 700 µm.

11. The resin laminate according to any one of claims 1 to 10, which has a total thickness of 680 to 840 µm.

12. The resin laminate according to any one of claims 1 to 11, wherein the outermost resin sheet constitutes the outermost layers of both the surfaces of the resin laminate.

13. The resin laminate according to any one of claims 1 to 12, wherein a resin forming the outermost resin sheet has a glass transition temperature of 130°C or higher.

14. A security card or ID card which comprises the resin laminate according to any one of claims 1 to 13.
